# FASCICULE DE BREVET EUROPEEN

(11) **EP 0 399 888 B1**
(45) Date de publication et mention de la délivrance du brevet: **15.12.1993**
(21) Numéro de dépôt: 90401347.1
(22) Date de dépôt: 21.05.1990
(51) Int. Cl.: F16H 33/08

(54) **Appareil de transmission mécanique automatique à variation continue du rapport de transmission depuis un rapport infini jusqu'à un rapport inférieur à 1/1**
Kontinuierlich verstellbares automatisches mechanisches Getriebe mit einem Übersetzungsverhältnis von unendlich bis kleiner als eins
Steplessly variable mechanical automatic transmission having a ratio between infinity and less than one

(30) Priorité: 24.05.1989 FR 8906804
(43) Date de publication de la demande: 28.11.1990
(73) Titulaire: Guichard, Louis, F-21000 Dijon (FR)
(72) Inventeur: Guichard, Louis, F-21000 Dijon (FR)
(74) Mandataire: Bruder, Michel

(56) Documents cités:
- EP-A- 0 172 557
- FR-A- 1 188 137
- US-A- 4 179 943

## Description

La présente invention concerne un appareil de transmission mécanique automatique à variation continue du rapport de transmission depuis un rapport infini jusqu'à un rapport inférieur à 1/1, du type faisant appel à des forces centrifuges.

Un tel appareil connu, tel que décrit dans le brevet EP-A-O 172 557, comporte un arbre menant et un arbre mené coaxiaux, un plateau menant entraîné par l'arbre menant, un plateau mené solidaire de l'arbre mené et portant une piste circulaire continue excentrée par rapport à l'axe commun des arbres menant et mené, des galets qui roulent à l'intérieur de la piste circulaire, chacun de ces galets étant porté par une biellette articulée, autour d'un axe d'articulation, sur le plateau menant, les articulations de toutes les biellettes étant uniformément réparties sur un cercle dont le centre se trouve sur l'axe commun des deux arbres coaxiaux. Un autre appareil connu de ce type comporte deux ensembles indépendants de galets, pistes, biellettes, articulations et plateaux menants, ces deux ensembles ayant des axes excentriques diamètralement opposés par rapport à l'axe commun des arbres menant et menés.

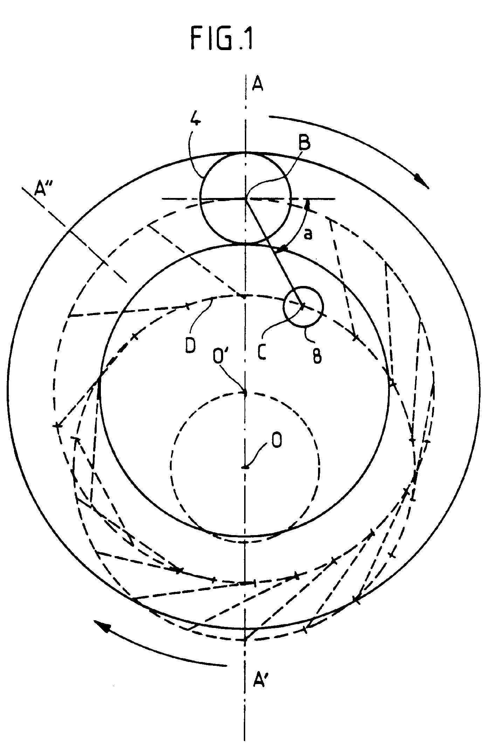

Dans ces appareils connus un diamètre A,A' (figure 1) passant par l'axe 0 commun aux arbres menant et mené et par l'axe 0' de la piste circulaire excentrée détermine, sur cette piste, deux demi-circonférences. Dans une demi-circonférence A.A' l'axe de chaque galet se déplace en se rapprochant de l'axe 0 des arbres menant et mené tandis que dans l'autre demi-circonférence A'.A, l'axe de chaque galet se déplace en s'éloigant de cet axe 0. Pendant le déplacement entre les points A' et A le galet subit une accélération et une augmentation de son énergie cinétique. Cette accélération est obtenue par la force d'entraînement de la biellette par l'arbre menant et par suite de la position angulaire de la biellette par rapport à la tangente à la trajectoire déterminée par la piste, cette force d'entraînement a pour effet de diminuer les efforts centrifuges du galet en rotation sur la demi-circonférence A'A. Au contraire pendant le déplacement du point A au point A', suivant la demi-circonférence opposée le galet subit une décélération et une diminution de son énergie cinétique et toujours par suite de la position angulaire de la biellette, cette décélération produit une poussée de la biellette et une augmentation des efforts des galets sur la piste lorsqu'ils tournent sur cette demi-circonférence A.A'. Les effets de ces diminutions des efforts sur la trajectoire A'.A et de ces augmentations des efforts sur la trajectoire A.A' s'additionnent pour exercer sur l'axe O' de la piste un couple de rotation qui est transmis à l'arbre mené d'axe O. Quand le récepteur commence à tourner puis accélère, les couples transmis diminuent en fonction notamment de la différence des vitesses entre l'arbre menant et le récepteur. Cet effet se traduit par une diminution de la fréquence des accélérations et décélérations précédemment indiquées. Ces couples tendent vers une valeur nulle quand ces vitesses sont égales et quand le rapport de transmission approche de 1/1, puis ils deviennent négatifs et croissants lorsque ce rapport est inférieur à 1/1.

Par ailleurs, quand le moteur tourne, les galets sont soumis à des forces centrifuges continues qui s'exercent dans toutes les directions autour de l'axe commun O. Ces forces centrifuges produisent des couples positifs sur l'axe O' pendant le trajet de A vers A' et négatifs pendant le trajet de A' vers A. On observera que par suite de la position angulaire des biellettes par rapport à la piste, la répartition du nombre des galets et par conséquent des masses actives, est inégale entre les deux demi-circonférences A.A' et A'.A, ces masses actives étant plus nombreuses sur le trajet de A vers A'. Les couples positifs transmis dans la partie A.A' sont alors toujours supérieurs aux couples négatifs transmis dans la partie A'.A. Il en résulte que, même quand le rapport des vitesses est de 1/1 et quand les couples dûs aux accélérations et décélérations n'existent plus, des couples dus aux seules forces centrifuges et à l'inégale répartition des galets sont toujours transmis, l'importance de ces couples étant fonction du régime de l'ensemble moteur-récepteur.

Les couples transmis par l'appareil sont en premier lieu les couples produits en fonction des augmentations et diminutions d'énergie cinétique qui sont dues, comme il a été expliqué précédemment, aux accélérations et décélérations des galets. Ces couples, qui sont les plus importants au démarrage, décroissent quand le rapport de transmission diminue et ils tendent vers une valeur nulle à l'approche du rapport 1/1. De plus avec le rapport 1/1 les couples sont transmis par suite de la répartition inégale du nombre des galets et des forces centrifuges entre les demi-circonférences A.A' et A'.A.

Ceci étant, toute modification des régimes et des couples moteurs réagit instantanément sur les rapports de transmission et sur les couples récepteurs et adapte ainsi automatiquement ces différents paramètres aux conditions de fonctionnement de l'appareil.

Les appareils de ce type qui sont connus à ce jour, présentent cependant de nombreux inconvénients. En effet, au cours du roulement des galets sur la piste, dans de nombreuses situations en fonction des forces centrifuges développées, les galets quittent la piste de roulement et retombent sur l'arbre menant et ensuite, lorsque les forces centrifuges augmentent, parfois brusquement, les galets sont rejetés contre la piste. Il s'ensuit des chocs répétés qui endommagent ces organes de l'appareil. Les galets ne sont pas assez lourds pour fournir des forces centrifuges assez puissantes, et les excentricités entre l'axe O' de la piste et l'axe central O sont trop réduites pour conférer à l'appareil une efficacité importante. Les appareils ont un volume important surtout quand ils comprennent au moins deux ensembles de galets, pistes et plateaux menants afin de s'équilibrer.

Une observation attentive de la figure 1 montre qu'en réalité les accélérations des galets dans la demi-circonférence A'A ne se produisent que jusqu'à la position A'' située avant la position A, et la décélération des galets commence effectivement à la position A'' et se continue en passant par A jusqu'à la position A'. Cette zone de décélération entre A'' et A produit malencontreusement des couples négatifs sur l'axe O' de la piste, qui font perdre en partie l'effet des couples positifs produits pendant le parcours en accélération de A' à A''.

Un but de la présente invention est de remédier à ces inconvénients en procurant un appareil ayant la plus haute efficacité et ce sous un volume réduit.

Ce but est atteint, suivant l'invention, du fait que chaque biellette portant un galet est articulée sur la partie externe d'une masselotte qui est elle-même articulée sur le moyeu solidaire de l'arbre menant, et chaque masselotte est alourdie dans sa partie externe la plus éloignée de son articulation sur le moyeu menant.

Suivant une autre caractéristique de l'invention l'appareil comporte, sur le plateau mené, une seconde piste circulaire, coaxiale et intérieure à la première piste et sur laquelle chaque galet peut rouler extérieurement, les deux pistes coaxiales ne laissant aux galets qu'un très faible jeu entre elles.

Suivant une caractéristique complémentaire de l'invention, chaque biellette est articulée, non pas directement sur le plateau menant, mais sur une masselotte alourdie qui est elle-même articulée sur le plateau menant, et un ressort disposé entre la biellette et la masselotte permet à l'ensemble : masselotte, biellette et galet de franchir la zone A''.A sans décélération notable et de reporter les décélérations et les couples correspondants dans la zone positive A.A'.

Suivant une autre caractéristique complémentaire de l'invention le centre de gravité de la partie externe alourdie de chaque masselotte est déporté par rapport à la ligne droite reliant le centre du galet et le centre de l'articulation sur le plateau menant, et ce vers l'avant dans le sens du déplacement en rotation du galet, dans le but d'augmenter les forces de traction sur la biellette, destinées à diminuer les efforts centrifuges sur la demi-circonférence A'A.

Suivant une autre caractéristique complémentaire de l'invention, pour permettre de grands débattements angulaires des biellettes et des masselottes, résultant des importantes excentricités utilisées, chaque ensemble biellette-masselotte est disposé latéralement par rapport au galet et est placé, par rapport à ce galet, du côté du plateau menant.

L'appareil suivant l'invention présente un certain nombre d'avantages. En premier lieu il permet d'obtenir une large plage de variation continue automatique du rapport de transmission depuis la vitesse de sortie nulle jusque au-delà du rapport 1/1, ce qui dispense d'utiliser un dispositif d'embrayage ou de couplage entre l'arbre moteur et le variateur de vitesse. Par ailleurs les couples de sortie au démarrage peuvent être beaucoup plus importants que le couple nominal moteur. Il permet également une adaptation automatique des rapports des vitesses et des couples aux meilleures conditions de fonctionnement. Sa conception est remarquablement simple, il offre une grande facilité de fabrication et d'adaptation, son prix de revient est faible, il présente un équilibrage dynamique parfait, il a un très bon rendement mécanique, un encombrement très faible, il est robuste et fiable et il permet de retenir le récepteur par le moteur. Il permet également de limiter la plage de variation du rapport des vitesses à la valeur 1/1 ou une valeur préaffichée. L'appareil suivant l'invention peut s'appliquer à des transmissions de puissances très diverses.

On décrira ci-après, à titre d'exemples non limitatifs, diverses formes d'exécution de la présente invention, en référence au dessin annexé sur lequel :

La figure 1 est un schéma illustrant les caractéristiques de base de l'appareil suivant l'invention.

La figure 2 est une vue en coupe transversale, faite suivant la ligne II-II de la figure 3, d'une forme d'exécution de l'appareil suivant l'invention.

La figure 3 est une vue en coupe axiale faite suivant la ligne III-III de la figure 2.

La figure 4 est une vue en coupe axiale d'une autre forme d'exécution de l'appareil suivant l'invention.

La figure 5 est une vue en couple axiale d'une autre forme d'exécution de l'appareil suivant l'invention.

La figure 6 est une vue de face d'une variante d'exécution d'un ensemble : masselotte, biellette, galet et ressort.

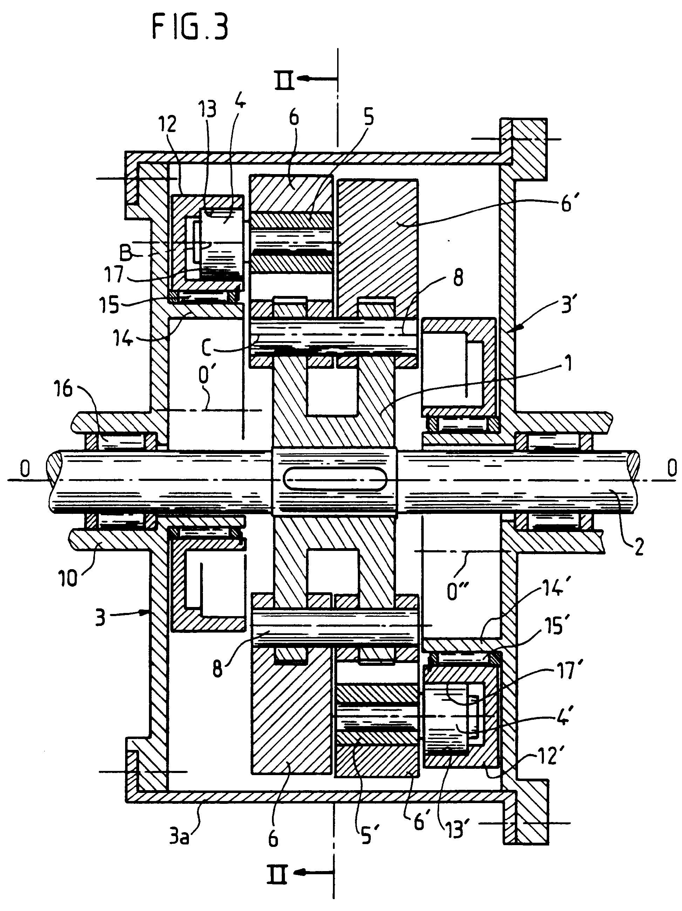

Comme on peut le voir sur les figures 1 et 3 l'appareil suivant l'invention comprend un moyeu transversal menant 1 solidaire d'un arbre menant 2 entraîné en rotation autour d'un axe central longitudinal O. Le moyeu menant 1, de forme circulaire, entraîne en rotation un plateau mené circulaire 3 d'axe O et solidaire d'un arbre mené tubulaire coaxial 10 entourant l'arbre menant 2. Le moyeu menant 1 entraîne une pluralité de galets 4 d'axes longitudinaux B, c'est-à-dire parallèles à l'axe O, et montés respectivement à rotation libre autour de ces axes B. Chaque galet 4 est monté à rotation sur une biellette 5 qui est articulée, autour d'un axe longitudinal, sur la partie externe d'une masselotte 6, par l'intermédiaire d'un pivot longitudinal 7 et chaque masselotte 6 est elle-même articulée sur le moyeu menant 1, par l'intermédiaire d'un pivot 8, autour d'un axe longitudinal C.

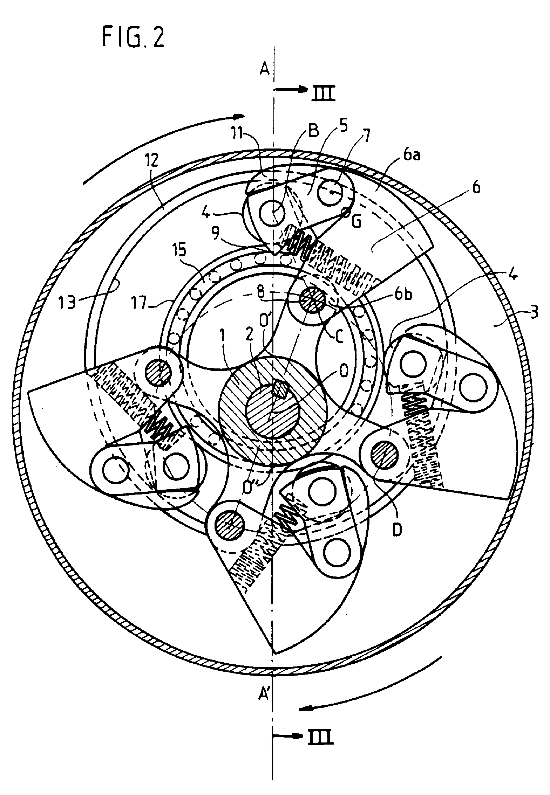

L'axe d'articulation de chaque biellette est porté par la masselotte 6 près de son extrémité opposée à celle qui porte le pivot 8 et cet axe de la biellette 5 se trouve placé en arrière par rapport à l'axe C du pivot d'articulation 8, ceci étant considéré par rapport au sens de rotation du moyeu menant 1, qui tourne dans le sens des aiguilles d'une montre sur les figures 1 et 2. Un ressort de poussée 9 disposé entre chaque biellette 5 et la masselotte 6 qui la porte, tend à les écarter l'une de l'autre, et l'ouverture angulaire de la biellette 5 est limitée par une butée 11 aménagée sur la masselotte 6.

L'appareil suivant l'invention comprend plusieurs ensembles constitués chacun d'un pivot d'articulation 8, d'une masselotte 6, d'une biellette 5, d'un ressort 9 et d'un galet 4, les axes C des pivots d'articulation 8 étant répartis uniformément sur un cercle intérieur D centré sur l'axe O et de rayon plus petit que la plus grande distance entre l'axe B d'un galet 4 et l'axe commun O.

Les galets 4 roulent sur la face intérieure d'une jupe cylindrique 12 qui constitue une piste circulaire 13. La jupe cylindrique 12 est portée, dans sa partie centrale, par un tourillon excentré 14 d'axe O', par l'intermédiaire d'un roulement (ou d'un coussinet) 15. Ce tourillon excentré 14 est solidaire du plateau mené 3 d'axe O, coaxial avec l'arbre menant 2 sur lequel il est centré par l'intermédiaire d'un roulement 16.

Au cours du roulement des galets 4 sur la piste 13, par exemple au démarrage ou aux vitesses de rotation lentes, le contact des galets 4 avec la piste 13 peut être perdu. Afin d'éviter des déplacements transversaux trop importants des axes B des galets 4, l'appareil comporte, sur la jupe cylindrique 12, une seconde piste circulaire 17, coaxiale et intérieure à la première piste 13 et sur laquelle chaque galet 4 peut rouler extérieurement, les deux pistes coaxiales 13,17 ne laissant aux galets qu'un très faible jeu entre elles.

Pour obtenir un ensemble suffisamment important de masses actives soumises aux accélérations, décélérations et forces centrifuges, nécessaires à la production des couples, il est également prévu, suivant l'invention, d'alourdir les masselottes 6. Chacune de ces masselottes 6 est ainsi alourdie dans sa partie externe 6a la plus éloignée de son articulation 8 sur le moyeu menant 1. Cette partie externe 6a présente une plus grande largeur ou dimension dans le sens circonférentiel que celle de la partie interne 6b plus proche de l'axe d'articulation C, comme on peut mieux le voir sur la figure 2. Le centre de gravité G de l'ensemble masselotte 6, biellette 5, galet 4 est ainsi déporté, par rapport à la droite BC, vers l'avant dans le sens de rotation des galets 4 autour de l'axe O.

Pour obtenir un équilibrage dynamique parfait de l'appareil et augmenter encore les couples transmissibles, l'appareil suivant l'invention peut comporter, suivant une autre forme d'exécution de l'invention, un second ensemble de masselottes 6', de biellettes 5' et de galets 4' roulant sur une troisième piste 13' faisant partie d'une seconde jupe cylindrique 12' montée, par l'intermédiaire d'un roulement (ou d'un coussinet) 15', sur un tourillon excentré 14' solidaire d'un second plateau mené 3' et dont l'axe O'' est excentré par rapport à l'axe longitudinal O, en étant diamètralement opposé à l'axe O' du premier plateau mené 3 portant la première jupe cylindrique 12 et la première piste 13. Ce second ensemble, qui est disposé en étant diamétralement opposé par rapport au premier ensemble et en étant décalé transversalement de la distance O'O'', comprend des masselottes 6' qui sont articulées, par les pivots 8, sur le moyeu menant solidaire de l'arbre menant 2. Les deux ensembles de masselottes 6,6' de biellettes 5,5' et de galets 4,4' sont placés dos à dos entre les deux plateaux menés 3,3'. Les deux plateaux menés transversaux 3,3' sont par ailleurs reliés l'un à l'autre par un corps cylindrique pour former un boîtier cylindrique 3a contenant tous les éléments mobiles de l'appareil.

La conception de l'appareil suivant l'invention est telle que la droite BC (figure 1) reliant l'axe B de rotation d'un galet 4 à l'axe C du pivot d'articulation 8 de la masselotte 6 sur le moyeu menant 1, et la tangente à la trajectoire circulaire de l'axe de rotation B du galet 4, forment un angle a qui, à sa valeur maximale, est très ouvert et qui peut varier, par exemple, de 0° à 75° au cours d'une révolution, ce qui permet d'utiliser une importante excentricité 00' pouvant atteindre 6/10 de la longueur BC.

Pour ne pas avoir à utiliser des galets 4 de grand diamètre roulant à des vitesses de rotation élevées à l'intérieur de la piste 13 ou 13', il a été prévu, suivant l'invention, de disposer un roulement ou un coussinet 15 ou 15' entre la piste circulaire et son axe 0' ou 0''. La présence de ce roulement 15 ou 15' ne modifie pas les résultats précités mais en permettant à la ou aux pistes 13,13' de tourner en même temps que l'ensemble des galets 4,4', des biellettes 5,5', et des masselottes 6,6', les galets 4,4' n'ont plus à subir des rotations continues et rapides à l'intérieur de la piste 13,13', mais seulement des débattements relatifs de faible amplitude. Cette disposition permet de réduire le diamètre des galets 4,4' ainsi que les dimensions extérieures de l'appareil.

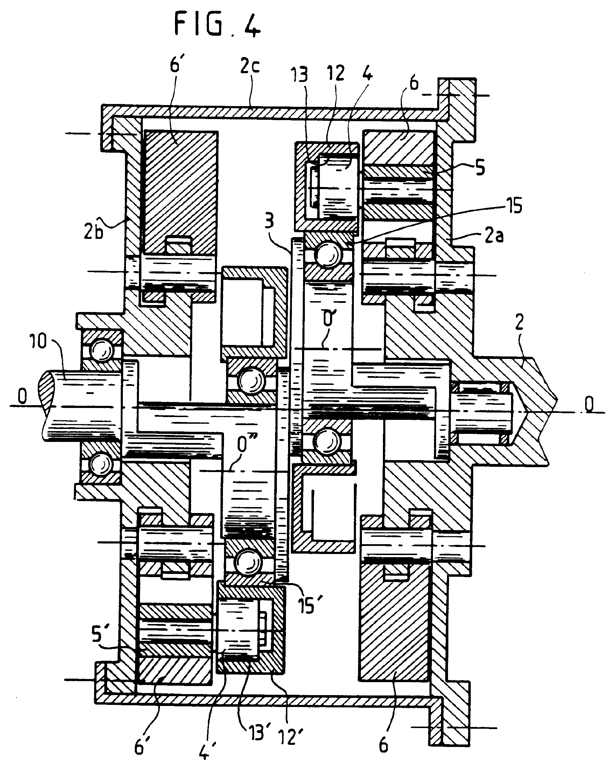

La figure 4 représente une autre forme d'exécution de l'appareil suivant l'invention. Tout en conservant les mêmes caractéristiques générales précédemment décrites, elle se différencie de l'exécution représentée à la figure 3, par le fait que les éléments menés : pistes 13,13' et roulements 15,15' portés par l'arbre mené 10 occupent une position centrale, et que les éléments menants : masselottes 6,6' biellettes 5,5' galets 4,4' sont portés par des plateaux menants 2a,2b reliés par un boîtier 2c qui occupent une position externe et qui contiennent l'ensemble des éléments.

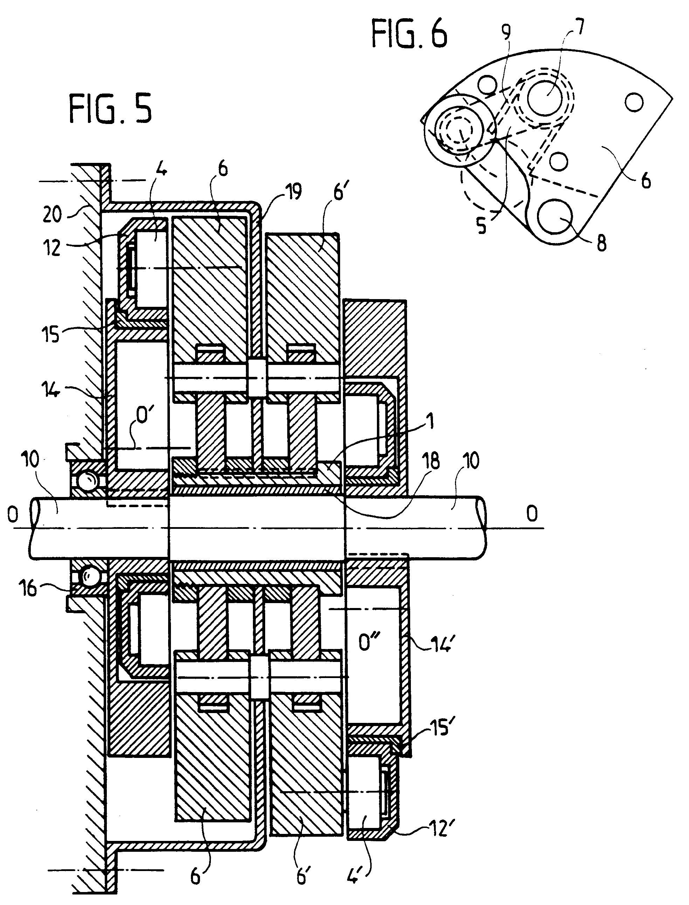

La figure 5 représente une autre forme d'exécution qui se différencie des précédentes par le fait que le moyeu menant 1 est monté à rotation autour de l'arbre mené central 10, par l'intermédiaire d'une bague ou de roulements 18, et que ce moyeu menant 1 est entraîné en rotation par un plateau intermédiaire 19 disposé entre les deux ensembles de masselottes 6,6', et solidaire par son bord extérieur avec le plateau moteur 20. Les jupes cylindriques 12,12' sont montées à rotation sur deux tourillons excentrés 14,14' solidaires de l'arbre mené central 10.

La figure 6 est une vue de face d'un ensemble: masselotte, biellette, galet et ressort, dans lequel la masselotte 6 et la biellette 5 sont écartées l'une de l'autre par la poussée d'un ressort de torsion 9 enroulé autour du pivot d'articulation 7.

Pour certaines applications industrielles utilisant des moteurs thermiques il est possible de régler et stabiliser les vitesses de sortie de l'arbre mené 10 en utilisant un dispositif régulateur agissant sur l'admission du moteur et donc sur les régimes de rotation et les couples. L'automatisme de la variation ne joue plus alors que depuis le démarrage jusqu'à la vitesse de sortie préréglée. On limite ainsi de la sorte la plage de variation des régimes de sortie, pour les stabiliser à une valeur préaffichée.

L'invention prévoit, au besoin, de disposer un élément à roue libre entre la partie motrice et la partie réceptrice pour limiter la plage de variation au rapport 1/1 et assurer la retenue du moteur sur ce même rapport.

## Revendications

1. Appareil de transmission mécanique automatique à variation continue du rapport de transmission depuis un rapport infini jusqu'à un rapport inférieur à 1/1, du type faisant appel à des forces centrifuges, comportant un arbre menant (2) et un arbre mené (10) ayant un axe commun (0), un moyeu menant (1) entraîné par l'arbre menant (2), au moins un plateau mené (3,3') solidaire de l'arbre mené (10) et portant au moins une piste circulaire continue (13), excentrée par rapport à l'axe commun (0) des arbres menant et mené (2,10), des galets (4,4') qui roulent à l'intérieur de la piste circulaire (13), en étant montés à rotation autour d'axes longitudinaux respectifs (B), chacun de ces galets (4,4') étant porté par une biellette (5,5') reliée à un axe d'articulation (C) sur le moyeu menant (1), tous ces axes d'articulation (C) étant uniformément répartis sur un cercle (D) dont le centre se trouve sur l'axe commun (0) des deux arbres menant et mené coaxiaux (2,10), caractérisé en ce que chaque biellette (5,5') portant un galet (4,4') est articulée sur la partie externe d'une masselotte (6,6') qui est elle-même articulée sur le moyeu (1) solidaire de l'arbre menant (2), et chaque masselotte (6,6') est alourdie dans sa partie externe (6a) la plus éloignée de son articulation (8) sur le moyeu menant (1).

2. Appareil suivant la revendication 1 caractérisé en ce qu'il comporte sur le plateau mené (3,3') une seconde piste circulaire (17), coaxiale et intérieure à la première piste (13) et sur laquelle chaque galet (4,4') peut rouler extérieurement, les deux pistes coaxiales (13,17) ne laissant aux galets (4,4') qu'un très faible jeu entre elles.

3. Appareil suivant l'une quelconque des revendications 1 et 2 caractérisé en ce que la partie externe de chaque masselotte (6,6'), (6a) de plus grande largeur dans le sens circonférentiel, porte l'articulation de la biellette (5,5').

4. Appareil suivant l'une quelconque des revendications précédentes caractérisé en ce qu'un ressort de poussée (9) disposé entre la biellette (5) et la masselotte (6) tend à les écarter l'une de l'autre et à repousser la biellette (5) jusqu'à une butée (11) aménagée sur la masselotte (6).

5. Appareil suivant l'une quelconque des revendications précédentes caractérisé en ce que le centre de gravité (G) de l'ensemble masselotte (6), biellette (5) et galet (4) est déporté par rapport à la droite (BC) reliant l'axe (B) du galet (4) et l'axe (C) de l'articulation (8), et ce vers l'avant dans le sens du déplacement en rotation du galet (4).

6. Appareil suivant l'une quelconque des revendications précédentes caractérisé en ce que chaque biellette (5) est disposée latéralement par rapport au galet (4) et est placée, par rapport à ce galet (4), du côté opposé au plateau mené (3).

7. Appareil suivant l'une quelconque des revendications précédentes caractérisé en ce qu'il comporte deux ensembles indépendants de galets (4,4'), pistes (13,17,13',17'), biellettes (5,5'), masselottes (6,6'), articulations (8), ces deux ensembles ayant des axes excentriques (0',0'') diamètralement opposés par rapport à l'axe commun (0) des arbres menant (2) et mené (10), et ces deux ensembles étant solidarisés par un boîtier (3a) contenant l'ensemble des éléments.

8. Appareil suivant l'une quelconque des revendications précédentes caractérisé en ce que la droite (BC) reliant l'axe (B) de rotation d'un galet (4) à l'axe (C) de l'articulation (8) de la masselotte (6) sur le moyeu menant (1) d'une part, et la tangente à la trajectoire circulaire de l'axe (B) de rotation du galet (4) d'autre part, forment un angle (a) qui, à sa valeur maximale, est très ouvert.

9. Appareil suivant l'une quelconque des revendications précédentes caractérisé en ce qu'il comporte un roulement ou un coussinet (15), entre les deux pistes excentrées (13,17) et un tourillon excentré (14) solidaire du plateau mené (3).

10. Appareil suivant l'une quelconque des revendications précédentes caractérisé en ce que le moyeu menant (1) est monté à rotation autour de l'arbre mené central (10), et entraîné par un plateau intermédiaire (19) disposé entre les deux ensembles de masselottes (6,6') et solidaire par son bord extérieur avec le plateau moteur (20).

## Patentansprüche

1. Kontinuierlich verstellbares, automatisches mechanisches Getriebe mit einem Übersetzungsverhältnis von unendlich bis kleiner als eins, das mit Zentrifugalkräften arbeitet, umfassend eine Antriebswelle (2) und eine Abtriebswelle (10), die eine gemeinsame Achse (0) haben, eine von der Antriebswelle (2) angetriebene Antriebsnabe (1), mindestens eine fest mit der Abtriebswelle (10) verbundene Abtriebsscheibe (3, 3'), die mindestens eine fortlaufende, kreisförmige Spur (13) aufweist, die bezüglich der gemeinsamen Achse (0) von Antriebs- und Abtriebswelle (2, 10) exzentrisch ist, Rollen (4, 4'), die innerhalb der kreisförmigen Spur (13) rollen und drehend um die jeweiligen Längsachsen (B) montiert sind, wobei jede Rolle (4, 4') von einer Pleuelstange (5, 5') getragen wird, die mit einer Drehachse (C) auf der Antriebsnabe (1) verbunden ist, wobei alle diese Drehachsen (C) gleichmäßig über einen Kreis (D) verteilt sind, dessen Mittelpunkt sich auf der gemeinsamen Achse (0) der beiden koaxial angeordneten An- und Abtriebswellen (2, 10) befindet, dadurch gekennzeichnet, daß jede eine Rolle (4, 4') tragende Pleuelstange (5, 5') auf dem äußeren Teil eines Gewichts (6, 6') schwenkt, das selbst auf der fest mit der Antriebswelle (2) verbundenen Nabe (1) geschwenkt wird, und jedes Gewicht (6, 6') an seinem äußeren Teil (6a), der am weitesten von seinem Gelenk (8) auf der Antriebsnabe (1) entfernt liegt, schwerer ist.

2. Getriebe nach Anspruch 1, dadurch gekennzeichnet, daß es auf der Abtriebsscheibe (3, 3') eine zweite kreisförmige Spur (17) aufweist, die koaxial zu und innerhalb der ersten Spur (13) verläuft, und auf der jede Rolle (4, 4') außen rollen kann, wobei die beiden koaxialen Spuren (13, 17) den Rollen (4, 4') untereinander nur ein sehr geringes Spiel lassen.

3. Getriebe nach einem der Ansprüche 1 und 2, dadurch gekennzeichnet, daß der äußerer, in Umfangsrichtung breitere Teil (6a) jedes Gewichts (6, 6') das Gelenk der Pleuelstange (5, 5') trägt.

4. Getriebe nach einem der vorstehenden Ansprüche, dadurch gekennzeichnet, daß eine zwischen der Pleuelstange (5) und dem Gewicht (6) angeordnete Druckfeder (9) diese beiden Teile auseinananderzudrücken und die Pleuelstange (5) bis zu einem auf dem Gewicht (6) vorgesehenen Anschlag (11) zu drücken sucht.

5. Getriebe nach einem der vorstehenden Ansprüche, dadurch gekenzeichnet, daß der Schwerpunkt (G) der Einheit aus Gewicht (6), Stange (5) und Rolle (4) bezüglich der die Achse (B) der Rolle (4) und die Achse (C) des Gelenks (8) miteinander verbindenden Geraden (BC), gesehen in der Drehgewegungsrichtung der Rolle (4), nach vorne verlagert wird.

6. Getriebe nach einem der vorstehenden Ansprüche, dadurch gekennzeichnet daß jede Pleuelstange (5) seitlich bezüglich der Rolle (4) angeordnet und gegenüber dieser Rolle (4) auf der zur Abtriebsscheibe (3) entgegengesetzten Seite angeordnet ist.

7. Getriebe nach einem der vorstehenden Ansprüche, dadurch gekennzeichnet, daß es zwei unabhängige Einheiten aus Rollen (4, 4'), Spuren (13, 17, 13', 17'), Pleuelstangen (5, 5'), Gewichten (6, 6'), Gelenken (8) aufweist, wobei diese beiden Einheiten exzentrische Achsen (0', 0'') aufweisen, die bezüglich der gemeinsamen Achse (0) von Antriebsachse (2) und Abtriebsachse (10) diametral entgegengesetzt sind, und diese beiden Einheiten durch ein Gehäuse (3a), in dem alle Elemente untergebracht sind, fest miteinander verbunden sind.

8. Getriebe nach einem der vorstehenden Ansprüche, dadurch gekennzeichnet, daß zum einen die Gerade (BC), welche die Drehachse (B) einer Rolle (4) mit der Achse (C) des Gelenks (8) des Gewichts (6) auf der Antriebsnabe (1) verbindet, und zum anderen die Tangente zur kreisförmigen Spur der Drehachse (B) der Rolle (4) einen Winkel (a) bilden, der bei seinem Höchstwert sehr offen ist.

9. Getriebe nach einem der vorstehenden Ansprüche, dadurch gekennzeichnet, daß es zwischen den beiden exzentrischen Spuren (13, 17) und einem exzentrischen Bolzen (14), der fest mit der Abtriebsscheibe (3) verbunden ist, ein Lager oder eine Büchse (15) aufweist.

10. Getriebe nach einem der vorstehenden Ansprüche, dadurch gekennzeichnet, daß die Antriebsnabe (1) drehend um die zentrale Abtriebswelle (10) montiert ist und von einer Zwischenscheibe (19) angetrieben wird, die zwischen den beiden Einheiten aus Gewichten (6, 6') angeordnet und mit ihrem Außenrand fest mit der Motorscheibe (20) verbunden ist.

## Claims

1. Automatic mechanical transmission apparatus with continuous variation of the transmission ratio from an infinite ratio up to a ratio less than 1/1, of the type employing centrifugal forces, comprising a driving shaft (2) and a driven shaft (10) having a common axis (0), a driving hub (1) driven by the driving shaft (2), at least one driven plate (3,3') fast with the driven shaft (10) and bearing at least one continuous circular track (13), eccentric with respect to the common axis (0) of the driving and driven shafts (2,10), rollers (4,4') which roll inside the circular track (13), being mounted to rotate about respective longitudinal axes (B), each of these rollers (4,4') being borne by a rod (5,5') connected to a pivot pin (C) on the driving hub (1), all these pivot axes (C) being uniformly distributed over a circle (D) whose centre lies on the common axis (0) of the two coaxial driving and driven shafts (2,10), characterized in that each rod (5,5') bearing a roller (4,4') is articulated on the outer part of a weight (6,6') which is itself articulated on the hub (1) fast with the driving shaft (2) and each weight (6,6') is rendered heavier in its outer part (6a) most remote from articulation (8) on the driving hub (1).

2. The apparatus of claim 1 characterized that it comprises, on the driven plate (3,3'), a second circular track (17), coaxial and inside the first track (13) and on which each roller (4,4') may roll externally, the two coaxial tracks (13,17) leaving the rollers (4,4') only a very small clearance therebetween.

3. The apparatus of claim 1 characterized in that the outer part (6a) of each weight (6,6'), of larger width circumference-wise, bears the articulation of the rod (5,5').

4. The apparatus of claim 1 characterized in that a thrust spring (9) disposed between the rod (5) and the weight (6) tends to move them apart from each other and to push the rod (5) up to a stop (11) arranged ont the weight (5).

5. The apparatus of claim 1 characterized in that the centre of gravity (G) of the weight (6)/rod (5)/roller (4) assembly is offset with respect to the straight line (BC) joining the axis (B) of the roller (4) and the axis (C) of the articulation (8), forwardly in the direction of displacement in rotation of the roller (4).

6. The apparatus of claim 1, characterized in that each rod (5) is disposed laterally with respect to the roller (4) and is placed, with respect to this roller (4), on the side opposite the driven plate (3).

7. The apparatus of claim 1, characterized in that it comprises two independent roller (4,4')/track (13,17, 13',17')/rod (5,5')/weight (6,6') articulation (8) assemblies, these two assemblies having eccentric axes (0',0'') diametrically opposite with respect to the common axis (0) of the driving and driven shafts (2,10), and these two assemblies are connected by a casing (3a)containing all the elements.

8. The apparatus of claim 1 characterized that the straight line (BC) joining the axis (B) of rotation of a roller (4) to the axis (C) of articulation (8) of the weight (6) on the driving hub (1), on the one hand, and the tangent to the circular path of the axis of rotation (B) of the roller (4), on the other hand, form an angle (a) which, at its maximum value, is very open.

9. The apparatus of claim 1 characterized that it comprises a roller bearing or a bearing (15) between the two eccentric tracks (13,17) and an eccentric journal (14) fast with the driven plate (3).

10. The apparatus of claim 1 characterized that the driving hub (1) is mounted to rotated about the central driven shaft (10) and driven by an intermediate plate disposed between the two weight assemblies (6,6') and fast by its outer edge with the driving plate (20).
